# FASCICULE DE BREVET EUROPEEN

(11) **EP 3 181 385 B1**
(45) Date de publication et mention de la délivrance du brevet: **25.04.2018**
(21) Numéro de dépôt: 16200366.9
(22) Date de dépôt: 23.11.2016
(51) Int. Cl.: B60J 7/00, B60J 1/20

(54) **DISPOSITIF D'OCCULTATION D'UNE SURFACE VITREE D'UN PAVILLON DE VEHICULE AUTOMOBILE A RAILS NON PARALLELES**
VERDUNKELUNGSVORRICHTUNG FÜR EINE GLASFLÄCHE EINES KRAFTFAHRZEUGVERDECKS MIT NICHT PARALLELEN SCHIENEN
DEVICE FOR CONCEALING A GLAZED SURFACE OF A MOTOR VEHICLE ROOF WITH NON-PARALLEL RAILS

(30) Priorité: 14.12.2015 FR 1562323
(43) Date de publication de la demande: 21.06.2017
(73) Titulaire: Advanced Comfort Systems France SAS - ACS France, 79302 Bressuire Cedex (FR)
(72) Inventeur: LEBOEUF, Regis, 85130 LES LANDES GENUSSON (FR); MARTINEAU, Daniel, 85700 SAINT-MESMIN (FR)
(74) Mandataire: Vidon Brevets & Stratégie

(56) Documents cités:
- EP-A1- 1 826 045
- EP-A1- 2 578 427
- DE-A1-102005 013 643
- DE-A1-102012 222 658

## Description

### 1. Domaine

Le domaine de l'invention est celui de l'équipement des véhicules automobiles, et notamment des véhicules présentant une surface vitrée importante, en particulier au niveau du pavillon et/ou de la lunette arrière.

Plus précisément, l'invention concerne les dispositifs prévus pour occulter une surface vitrée de forme complexe, nécessitant notamment des rails non parallèles.

### 2. Art antérieur

Les baies vitrées de surface importante sont devenues des éléments incontournables des véhicules automobiles modernes. Ménagées dans la carrosserie, elles permettent de proposer aux utilisateurs des véhicules au design nouveau et à l'habitacle lumineux. On propose en particulier des pavillons de véhicules présentant des surfaces vitrées de plus en plus conséquentes, correspondant le cas échéant à l'intégralité ou à une partie essentielle du pavillon.

Dans un soucis de protéger les occupants du véhicule du rayonnement lumineux et de la chaleur notamment, et de leur permettre de gérer l'apport de luminosité au sein de l'habitacle, de tels pavillons sont équipés de moyens d'occultation, et par exemple de stores d'occultation.

De nombreux types de stores d'occultation de pavillons vitrés sont connus de l'art antérieur. Les stores d'occultation comprennent généralement une toile apte à s'enrouler autour d'un enrouleur, et à se dérouler, de manière à respectivement découvrir ou recouvrir la surface vitrée du pavillon. L'extrémité de la toile est fixée à une barre de tirage, s'étendant entre deux rails de guidage, de manière à être guidée dans un mouvement de translation. L'entraînement de la barre de tirage peut être manuel ou encore motorisé.

Dans de nombreux véhicules, les surfaces vitrées des pavillons ne sont pas rectangulaires, mais de forme plus complexe, notamment essentiellement trapézoïdale, adaptée au véhicule, en fonction de critères esthétiques par exemple.

Dans ce cas, notamment pour disposer du clair de baie le plus important possible, les rails permettant de guider la barre de tirage sont adaptés pour suivre autant que faire se peut les bords de la surface vitrée, et ne sont donc pas parallèles. Souvent, les rails s'éloignent progressivement l'un de l'autre, de l'arrière vers l'avant du véhicule, de manière que l'écart entre les rails à une extrémité du pavillon (généralement l'extrémité avant) est plus large qu'à l'autre extrémité du pavillon (généralement l'extrémité arrière).

Ceci pose différents problèmes, pour le déroulement et l'enroulement de la toile. Tout d'abord, la longueur de la barre de tirage doit varier, pour s'adapter à l'écartement variable des rails. Ensuite, de la même façon, la largeur des moyens d'occultation doit varier, si l'on souhaite une occultation efficace.

En effet, si l'on considère que la partie la plus étroite (écartement entre les rails le plus faible) est la zone où est situé le tube enrouleur, on comprend que la toile ne peut pas être plus large que la longueur de ce tube enrouleur. En conséquence, lorsqu'elle est déployée, des zones latérales du pavillon, essentiellement en forme de triangle, ne sont pas occultées, dans la partie où les rails sont les plus éloignés l'un de l'autre (généralement la partie avant du véhicule).

Pour pallier cet inconvénient, il a été proposé plusieurs approches pour compenser la variation de l'écart entre les rails au cours du déroulement (ou de l'enroulement) de la toile, faisant appel à des moyens complémentaires d'occultation, venant occulter ces zones latérales.

D'une manière générale, ces moyens complémentaires supposent un élément autre que la toile, par exemple sous la forme d'un volet ou d'une autre portion de toile, déployé par exemple par l'intermédiaire de la barre de tirage.

L'inconvénient de ces systèmes est qu'ils sont relativement complexes et encombrants (nuisant au clair de baie lorsqu'ils ne sont pas déployés), et que, esthétiquement, l'ensemble déployé n'est pas uniforme.

Une autre technique connue du brevet EP 1 449 692 met en oeuvre une toile étirable en largeur.

Cette technique pose cependant l'inconvénient de soumettre la toile à des forces latérales relativement importantes, qui peuvent sur le long terme endommager la toile.

Les documents EP 1 449 692 et DE 10 2012 222658 A1 divulguent le préambule de la revendication 1. Un objectif de l'invention est donc de proposer un nouveau type de store d'occultation de surface vitrée, qui soit applicable aux géométries complexes des pavillons des véhicule automobiles modernes, notamment aux pavillons essentiellement trapézoïdaux, et plus généralement à rails non parallèles.

L'invention a également pour objectif de fournir une telle technique, qui préserve la qualité et l'aspect de la toile du store occulteur.

L'invention a encore pour objectif de fournir une telle technique qui soit simple et efficace à mettre en oeuvre.

Un autre objectif de l'invention est de fournir une technique qui soit fiable, simple et peu coûteuse à réaliser.

### 3. Exposé de l'invention

Ces objectifs, ainsi que d'autres qui apparaîtront par la suite, sont atteints à l'aide d'un dispositif d'occultation d'une surface vitrée d'un véhicule automobile comprenant deux rails de guidage non parallèles et une toile guidée en translation entre lesdits rails de guidage pour couvrir ou découvrir ladite surface vitrée, ladite toile portant sur chacun de ses bords longitudinaux des moyens de retenue circulant dans un canal de retenue formé dans et/ou porté par chacun desdits rails, une partie de la toile, s'étendant à partir desdits bords longitudinaux, circulant à l'intérieur dudit rail.

Selon la présente technique, la position du canal, rapportée dans un plan perpendiculaire à l'axe longitudinal du rail varie donc progressivement par rapport audit rail, de façon que la quantité de toile circulant dans ledit rail varie en correspondance.

Cette technique permet qu'une portion des bords de la toile soit progressivement « absorbée » par les rails à mesure que les rails se rapprochent l'un de l'autre, et inversement progressivement « libérée » à mesure que les rails s'éloignent l'un de l'autre, de manière à adapter la largeur de toile recouvrant la surface vitrée du pavillon à la largeur instantanée des rails. En d'autres termes, la longueur de toile reste constante, mais ses bords sont plus ou moins logés dans les rails, de façon que la « largeur utile » (portion occultant effectivement la partie vitrée) soit toujours adaptée à l'écartement entre les rails.

La présente technique est simple à mettre en oeuvre et ne nécessite pas l'utilisation de moyens complémentaires de recouvrement de surfaces latérales du pavillon, comme c'était le cas dans l'art antérieur.

Selon un aspect particulier, la position du canal varie selon au moins deux directions sensiblement perpendiculaires à l'axe longitudinal du rail (par exemple en Y (largeur) et en Z (hauteur), dans le référentiel classique d'une automobile).

Ainsi, la trajectoire constituée par les positions successives du canal (rapportées dans un plan perpendiculaire à l'axe longitudinal du rail) n'est pas linéaire mais permet un « enroulement » variable de la toile à l'intérieur du rail.

Par exemple, le canal suit une trajectoire formant une courbe lorsqu'elle est projetée sur le plan perpendiculaire.

Cette courbe est une trajectoire simple relativement à modéliser et réaliser, et constitue une solution efficace pour réaliser « l'enroulement » de la toile dans le rail.

Selon un mode de réalisation particulier, le canal est formé directement dans le rail.

Selon un autre mode de réalisation particulier, le canal est formé dans un guide de toile monté sur le rail.

L'utilisation d'un guide de toile peut permettre de simplifier les opérations de fabrication du dispositif, le rail (sur lequel est monté le guide) pouvant être réalisé notamment par extrusion, et présenter un profil similaire sur toute sa longueur, la variation de la position des bords de toile étant prise en charge par le guide de toile rapporté sur le rail.

Selon un aspect particulier de l'invention, les moyens de retenue peuvent comprendre un renflement s'étendant sur les bords longitudinaux de la toile.

Ce renflement présente une forme complémentaire et/ou apte à s'insérer dans une rainure ou un canal formé et/ou monté sur les rails, de manière à former une butée de retenue de la toile dans la direction latérale (direction Y).

Selon un mode de réalisation particulier, le toile est solidaire d'une barre de tirage télescopique mobile en translation entre les rails de guidage.

La barre de tirage, par exemple entraînée par des câbles actionnés par un moteur, permet de faire coulisser la toile entre les rails. Le fait qu'elle soit télescopique permet que sa longueur soit adaptée à la distance entre les rails à un instant t du déroulement/enroulement de la toile.

Selon un aspect particulier, le dispositif d'occultation comprend des moyens de pliage / dépliage d'au moins un des bords longitudinaux de la toile, de façon que ces bords longitudinaux soient enroulés de façon pliée sur l'enrouleur.

Cette solution est particulièrement bien adaptée dans le cas où le tube d'enroulement est plus court que la largeur de la toile dans la zone où les rails sont le plus proches.

Selon un aspect particulier, un traitement spécifique des bords de toile est prévu au voisinage du tube enrouleur, pour assurer que l'enroulement et/ou le déroulement s'effectue de la façon souhaitée. Ceci peut être assuré à l'aide d'une pièce distincte, ou extension, placée dans le prolongement du rail (à proximité de l'extrémité du rail proche de l'enrouleur), et/ou par une adaptation de l'extrémité du rail et/ou du guide de toile que porte ce dernier. Notamment, selon les modes de réalisation, ce traitement spécifique peut permettre au moins deux modes d'enroulement de la toile : enroulement à plat autour du tube d'enroulement ou enroulement en double épaisseur d'au moins un des bords de toile).

Ainsi, selon un mode de réalisation particulier, le dispositif de l'invention comprend des moyens de guidage d'au moins un desdits bords longitudinaux de la toile, adaptant la position dudit bord longitudinal entre ledit canal et un enrouleur, de façon que ledit bord longitudinal soit enroulé de façon repliée sur lui-même sur ledit enrouleur.

Il est ainsi possible d'enrouler la toile sur un tube enrouleur de largeur inférieure à la largeur de la toile.

Selon un autre mode de réalisation, le dispositif d'occultation comprend des moyens de guidage d'au moins un desdits bords longitudinaux de la toile, adaptant la position dudit bord longitudinal entre ledit canal et un enrouleur, de façon que ladite toile soit enroulée à plat sur ledit enrouleur.

Ainsi, la toile n'est pas enroulée pliée sur le tube d'enroulement mais « à plat », ou de manière plane, la largeur totale de la toile venant prendre place sur la surface du tube enrouleur. Ceci peut permettre d'éviter des marques de pliage sur les bords de toile, notamment lorsque la toile reste pendant longtemps en position enroulée (le store étant donc ouvert).

La présente invention concerne également un véhicule automobile comprenant au moins un dispositif d'occultation tel que décrit ci-dessus.

### 4. Liste de figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la **figure 1** est une vue d'ensemble, en trois dimensions, du store d'occultation comprenant deux rails de guidage non parallèles selon un mode de réalisation préférentiel ;
- la **figure 2** illustre un rail de guidage selon ce mode de réalisation préférentiel, muni d'un guide de toile à profil variable, et sur lequel sont placés cinq axes de coupe A, B, C, D, et E ;
- les **figures 3A et 3B** sont des vues en coupe du rail équipé du guide de toile selon les axes A et B de la figure 2 :

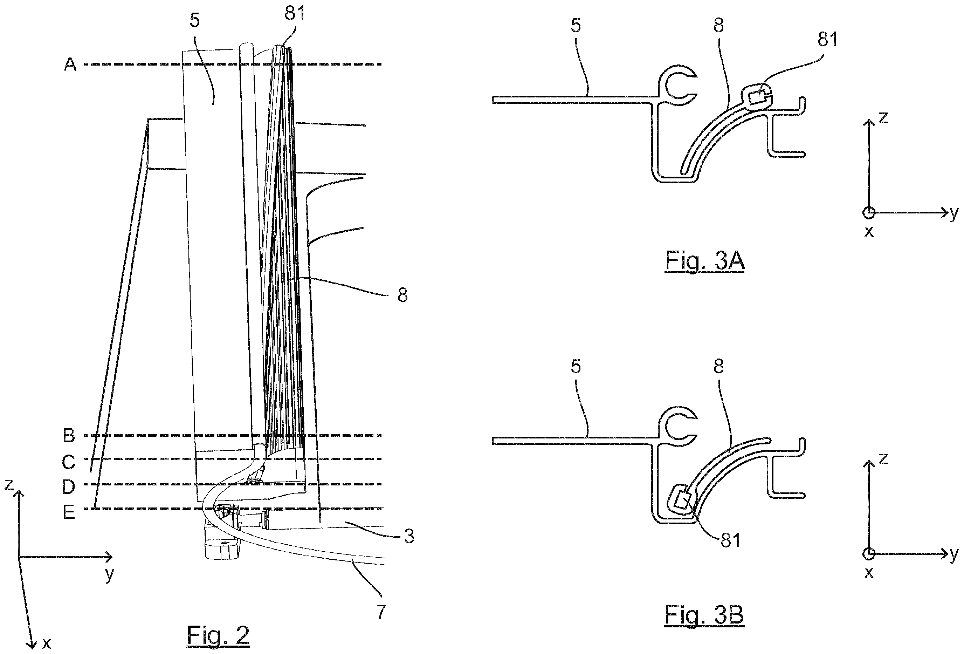

   - **figure 3A** **:** coupe selon l'axe A ;
   - **figure 3B** **:** coupe selon l'axe B ;

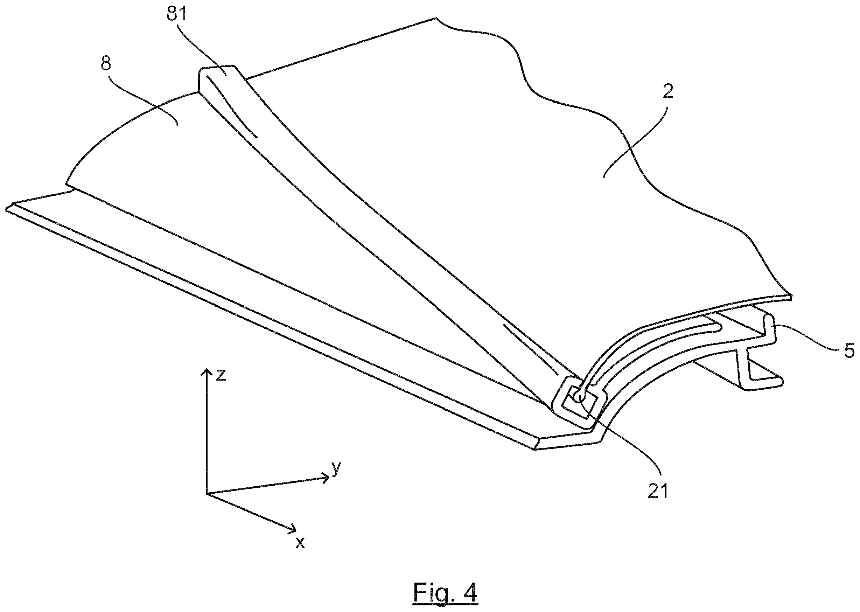

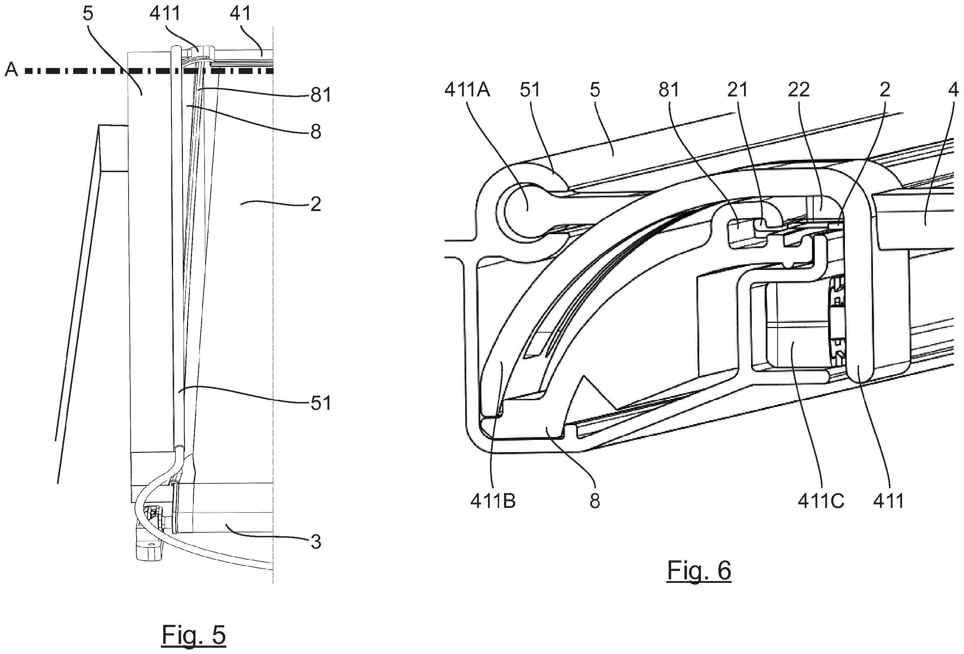

- la **figure 4** est une vue en trois dimensions du guide de toile à profil variable entre les sections A et B ; la **figure 5** illustre le guidage d'un bord de toile dans un rail de guidage selon le mode de réalisation préférentiel ;
- la **figure 6** représente la liaison entre la barre de tirage de la toile et le rail selon l'axe A de la figure 5;

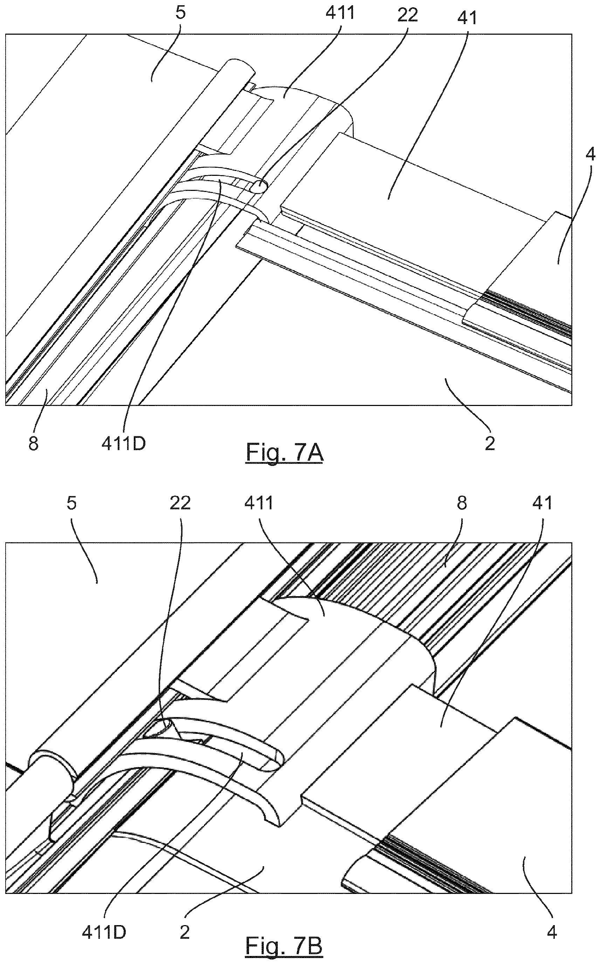

- les **figures 7A et 7B** représentent l'embout de liaison de la barre de tirage avec le rail dans deux positions de la toile :
   - **figure 7A** **:** toile déroulée ;
   - **figure 7B** **:** toile enroulée ;

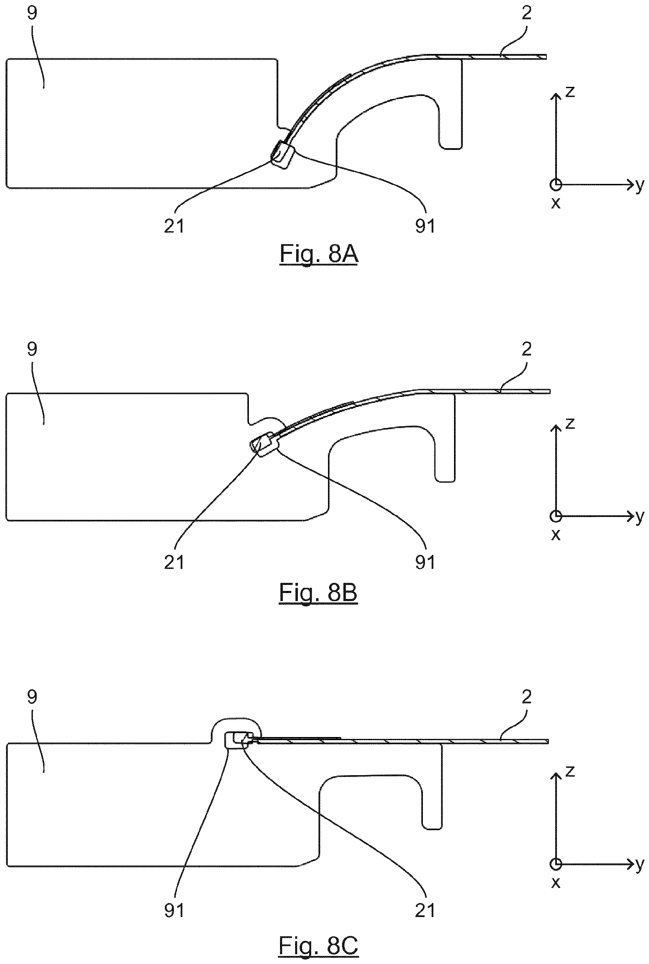

- les **figures 8A à 8C** sont des vues en coupe d'un élément de guidage pour enroulement à plat de la toile suivant les axes C, D et E de la figure 2, selon le mode de réalisation préférentiel :
   - **figure 8A** **:** coupe selon l'axe C ;
   - **figure 8B** **:** couple selon l'axe D ;
   - **figure 8C** : coupe selon l'axe E ;

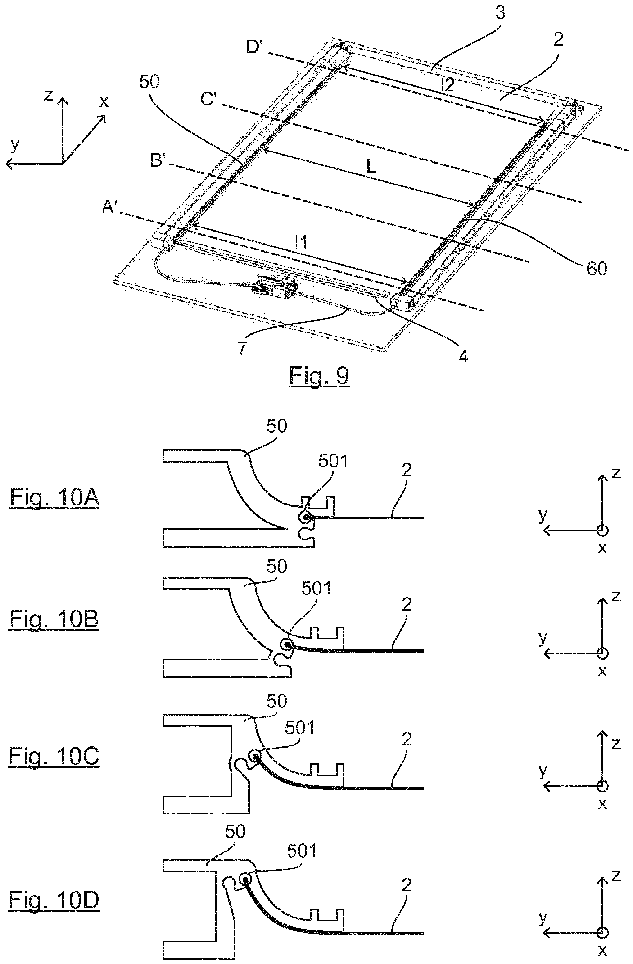

- la **figure 9** représente une vue d'ensemble du store d'occultation selon un mode de réalisation alternatif associant un guidage dans un canal formé dans le rail et un élément de guidage pour enroulement en double épaisseur de la toile ;
- les **figures 10A à 10D** sont des vues en coupe d'un rail selon les axes de coupe A', B', C' et D' de la figure 9 :
   - **figure 10A** **:** coupe selon l'axe A' ;
   - **figure 10B** **:** coupe selon l'axe B' ;
   - **figure 10C** **:** coupe selon l'axe C' ;
   - **figure 10D** **:** coupe selon l'axe D' ;

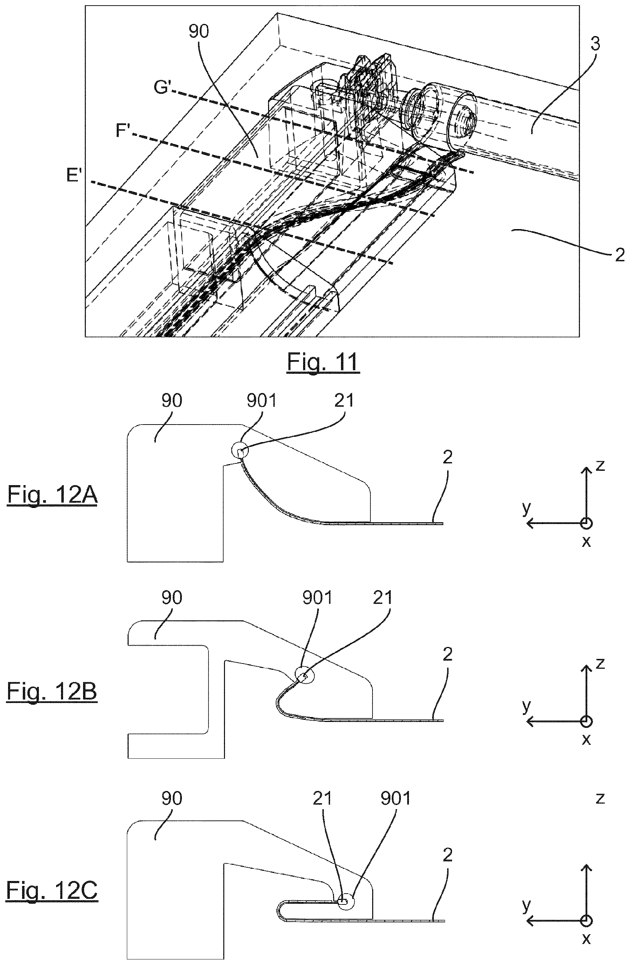

- la **figure 11** est une vue rapprochée d'une portion de rail de la figure 9, où l'écart entre les rails est le plus faible, et sur laquelle sont placés trois axes de coupe E', F' et G' ;
- les **figures 12A à 12C** sont des vues en coupe de l'élément de guidage pour enroulement en double épaisseur de la toile, selon les axes de coupe de la figure 11 :
   - **figure 12A** **:** coupe selon l'axe E' ;
   - **figure 12B** **:** coupe selon l'axe F' ;
   - **figure 12C** **:** coupe selon l'axe G'.

### 5. Description détaillée d'un mode de réalisation de l'invention

### 5.1 Principe général

L'invention repose sur une nouvelle approche de l'occultation d'une surface vitrée d'un pavillon de véhicule automobile présentant une forme complexe, et notamment des rails non parallèles.

En particulier, l'invention concerne un dispositif d'occultation qui met en oeuvre une « absorption » d'une portion de la largeur de la toile dans la zone du store où les rails se rapprochent l'un de l'autre, contrairement aux solutions connues qui mettent en oeuvre un ajout de moyens d'occultation dans la zone où les rails s'écartent l'un de l'autre. En d'autres termes, la dimension de la toile est choisie de façon qu'elle occulte intégralement l'espace entre les rails, lorsque cet espace est le plus important (alors que, selon l'art antérieur, la largeur de la toile correspond à l'écartement minimal entre les rails). En conséquence, des moyens sont prévus dans les rails, pour absorber le surplus de largeur, dans les zones où l'écartement entre les rails est réduit.

Le principe général de l'invention repose ainsi sur un dispositif d'occultation d'une telle surface vitrée, comprenant une toile dont les bords longitudinaux sont guidés en translation dans les rails de guidage de façon optimisée, par l'intermédiaire de moyens de retenue circulant dans un canal formé dans et/ou porté sur chacun des rails. Selon l'invention, ce canal n'est pas parallèle au rail qui le porte, ou dans lequel il est formé, mais adopte une position variant par rapport à celui-ci, de façon qu'une portion plus ou moins importante de la toile soit logée dans le rail. On compense ainsi progressivement la variation de l'écart entre les deux rails, en logeant si nécessaire le surplus de toile à l'intérieur de ces rails.

Les bords longitudinaux de la toile sont donc « enroulés » (ou « logés », ou « absorbés ») dans le rail, de façon progressivement décroissante au fur et à mesure que l'écartement entre les rails augmente. La toile présente donc une longueur adaptée à l'écartement maximal, et le surplus, dans les zones où cet écartement est moindre, vient se loger dans les rails.

Bien sûr, cette absorption dans les rails se fait de façon progressive, ce qui suppose une variation progressive de la position du canal par rapport au rail, en section.

Les positions successives du canal le long du rail, rapportées dans un plan perpendiculaire à l'axe longitudinal du rail, définissent ainsi une trajectoire que suit le bord de la toile de façon qu'un surplus de celle-ci soit absorbé par le rail dans la zone du store où les rails se rapprochent l'un de l'autre.

### 5.2 Premier mode de réalisation

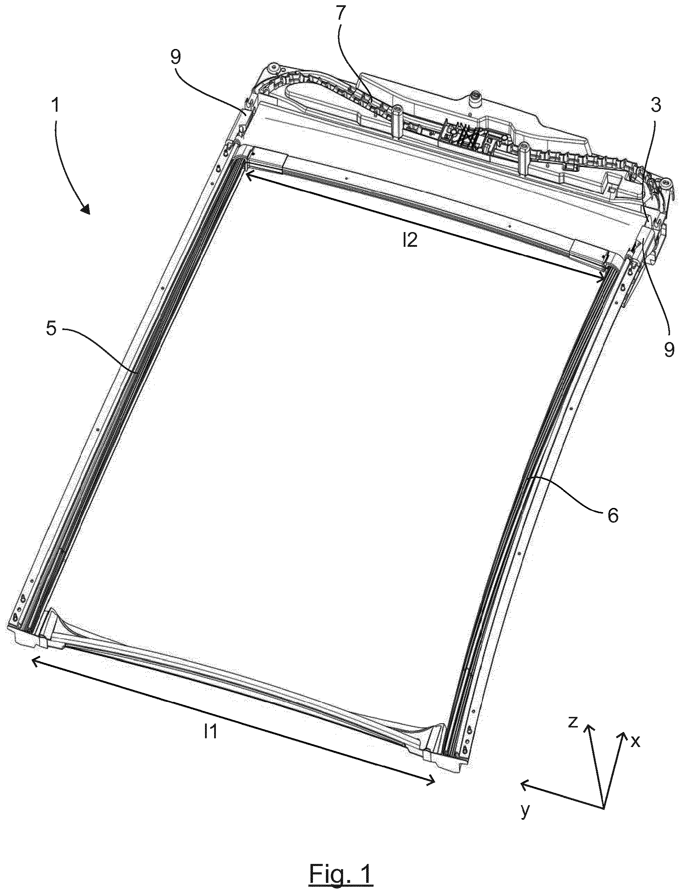

Un premier mode de réalisation de l'invention concerne les **figures 1 à 8C****.**

La **figure 1** présente une vue générale d'un store d'occultation **1** destiné à être fixé sur un pavillon de véhicule automobile comportant une surface vitrée. Le store comprend une toile **2** mobile en translation par rapport à la surface vitrée entre deux positions extrêmes du store : une position « fermée» dans laquelle la toile est déroulée et recouvre l'intégralité de la surface vitrée et une position « ouverte » du store dans laquelle la toile est enroulée et libère la surface vitrée (cas illustré sur la figure 1).

Une première extrémité de la toile **2** est enroulée autour d'un tube d'enroulement **3** tandis que sa deuxième extrémité est fixée à une barre de tirage **4** de longueur variable, par exemple télescopique.

La barre de tirage **4** s'étend entre deux rails **5, 6** de manière à suivre sensiblement les bords (non parallèles) de la surface vitrée du pavillon. La barre de tirage **4** est ainsi apte à coulisser le long des rails **5, 6.** A cet effet, le dispositif d'occultation **1** comprend un organe d'entrainement **7** motorisé, actionnant deux câbles respectivement connectés à chacune des extrémités de la barre de tirage **4.** D'autres moyens d'entrainement peuvent bien sûr être mis en oeuvre.

L'organe d'entraînement motorisé est par exemple placé du côté de l'enrouleur **3** comme illustré sur la **figure 1****,** mais peut également être placé du côté opposé à l'enrouleur comme illustré sur la **figure 9****.**

Bien entendu, des moyens d'actionnement manuel de la barre de tirage **4** peuvent également être mis en oeuvre.

La toile **2** présente un format rectangulaire de largeur **L** fixe, en l'absence de sollicitations. Dans un mode de réalisation particulier, la toile est étirable : la largeur L est alors la largeur « au repos » de la toile, lorsque celle-ci n'est pas étirée. Elle est équipée sur au moins une partie essentielle de la longueur de ses bords longitudinaux de deux éléments de retenue **21** parallèles (visibles sur les **figures 4** et **6**) présentant une forme renflée.

Les éléments de retenue **21** coopèrent avec un canal **81** formé sur le rail (décrit plus en détails au paragraphe 5.2.1). Le renflement **21,** une fois entré à l'intérieur du canal **81,** y est retenu grâce à sa forme renflée, ou bombée, plus large que la fente permettant le passage de la toile, et formant butée dans la direction Y (largeur du véhicule, et donc de la toile).

L'invention s'applique en particulier à des pavillons vitrés de forme non rectangulaires, pour lesquels un store d'occultation à rails parallèles n'est pas efficace, dans l'optique notamment d'obtenir un clair de baie le plus important possible et/ou l'aspect esthétique souhaité.

Ainsi, selon le mode de réalisation illustré, les rails **5, 6** se rapprochent progressivement l'un de l'autre, de l'avant vers l'arrière du véhicule (direction X du véhicule), de telle manière que l'écartement **I1** entre les deux rails à leurs extrémités avant est plus grand que l'écartement **I2** entre les deux rails à leurs extrémités arrière. Selon les véhicules, la forme et la direction des rails peuvent être adaptés. Par exemple, la partie plus large peut être à l'arrière, les rails peuvent ne pas être rectilignes, mais incurvés ou galbés, dans une plusieurs directions.

L'écartement maximal entre rails **I1** est sensiblement égal à la largeur de toile L (une légère portion de la toile pouvant cependant rester dans le rail). La deuxième extrémité du store, à l'arrière du véhicule (côté enrouleur), présente quant à elle une largeur de rails **I2** inférieure à la largeur de toile **L** (et à la largeur **I1**). Par conséquent, une certaine quantité de toile **ΔL** = **L - I2** doit être absorbée par les rails entre la première extrémité et la deuxième extrémité du store, en particulier au cours de l'enroulement de la toile **2.**

Dans tout ce qui suit, l'invention est décrite en lien avec un seul rail, les deux rails **5, 6** présentant, dans ce mode de réalisation, une structure et un profil symétriques.

### 5.2.1 Guidage de la toile dans un guide de toile monté sur le rail

Cinq axes A, B, C, D et E perpendiculaires à l'axe longitudinal X du rail, sont repérés sur la **figure 2****.** Les axes A à B concernent le guidage de la toile dans les rails, et les axes C à E concernent le guidage de la toile dans un élément additionnel de guidage de la toile vers l'enrouleur.

Le guidage de la toile dans les rails, et plus particulièrement le guide de toile **8** (axes A à B) est tout d'abord décrit en lien avec les figures **2** à **4****.**

Le guide de toile **8** est un élément additionnel, porté par le rail, qui permet l'absorption du surplus de toile dans la zone où les rails sont rapprochés. Ce guide de toile **8** présente un profil qui évolue progressivement selon l'axe longitudinal X du rail. Plus précisément, il comprend un canal **81** dont la position évolue progressivement et à l'intérieur duquel peut coulisser le renflement **21** du bord latéral de la toile **2.**

Dans ce premier mode de réalisation, on peut parler d'un guidage de la toile dans un rail « bi-pièces ».

La **figure 3A** correspond à une vue en coupe selon l'axe A (dans le plan YZ) du rail **5** portant le guide de toile **8,** dans la zone du pavillon où les rails **5, 6** sont le plus écartés. La **figure 3B** correspond à une vue en coupe du rail selon l'axe B, dans une zone du pavillon où les rails se sont rapprochés l'un de l'autre.

Sur ces figures, on observe que le guide de toile **8** présente sensiblement une section courbe en arc-de-cercle, épousant la courbure du rail **5** sur lequel il est monté.

Dans la section A, le canal **81** est formé sur le bord interne du guide de toile **8.** La largeur **I1** entre les rails (la plus grande) est alors sensiblement égale à la largeur **L** de la toile. Dans cette première configuration, un maximum de toile est disponible hors du rail, et un minimum de toile est logé à l'intérieur du rail.

La position du canal **81** évolue ensuite petit à petit au fil de la longueur du rail (direction X), le canal **81** se « déplaçant » sur le guide de toile **8** selon les directions Y et Z, jusqu'à atteindre le bord externe du guide de toile **2** comme illustré sur la **figure 3B** (section B). Dans cette deuxième configuration, un minimum de toile est exposé hors du rail, et un maximum de toile (sensiblement égal à **ΔL**/2) est rentré à l'intérieur du rail.

En comparant la position du canal **81** entre les sections A et B, on note que l'extrémité de la toile a effectué une rotation d'un quart de tour selon les axes Y et Z, permettant qu'une certaine quantité de toile soit « absorbée » par le rail.

Dans la section B, les rails présentent une largeur **I2** plus faible que la largeur L de la toile. Une quantité **ΔL**/2 de toile a donc été « absorbée » dans chacun des rails du fait de la trajectoire du canal **81** du guide de toile **8.**

La trajectoire globale du canal **81** est illustrée en trois dimensions sur la **figure 4****,** le rail étant masqué. On notera à nouveau que la trajectoire suivie par le canal **81** au sein du rail **80** n'est pas parallèle à l'axe longitudinal du rail.

### 5.2.2 Enroulement à plat de la toile

Selon un premier mode de réalisation, la largeur du tube enrouleur **3** est adaptée pour enrouler à plat la toile **2,** c'est-à-dire qu'elle est au moins égale à **L.**

Au moment de l'enroulement, la toile **2** doit être ramenée à plat, alors que ses bords sont « enroulés » dans les rails, écartés de seulement **I2** à l'extrémité des rails proche de l'enrouleur.

Pour ceci, un élément de guidage additionnel **9,** visible sur les **figures 1** et **8A** à **8C,** est utilisé, dans le prolongement du rail **5**. Cet élément de guidage est par exemple une pièce plastique, présentant un prolongement du canal guidant le bord de la toile, pour le ramener à plat pour l'enroulement, et pour le placer dans la position adéquate à l'extrémité du rail, lors du déroulement. En variante, l'élément de guidage **9** peut être formé dans la même pièce que le guide de toile **8.**

Le guidage de la toile dans cet élément de guidage **9** correspond aux sections C à E de la **figure 2****.** Il est décrit à suivre en lien avec les figures **8A** à **8C****.**

L'élément de guidage **9** présente un canal **91** qui suit également une trajectoire dont la position évolue progressivement dans la direction X et à l'intérieur duquel peut coulisser le renflement **21** du bord latéral de la toile **2.**

Dans la section C (**figure 8A**), c'est-à-dire à la sortie du rail (lorsque l'on effectue un enroulement de la toile), la toile **2** est introduite dans le canal **91** sensiblement dans le prolongement du canal **81** du guide de toile, c'est-à-dire en formant une portion d'arc de cercle vers le bas (direction Z).

Plus la toile **2** se rapproche de l'enrouleur **3** (dans le mouvement d'ouverture du store par exemple), plus la toile **2** est redressée de manière à prendre une position dans laquelle elle s'étend horizontalement, à plat, comme représenté sur la **figure 8C** (section E).

La toile **2** est ainsi enroulée autour de l'enrouleur (et déroulée lors de l'opération de fermeture du store) sur toute sa largeur **L.** Ceci permet notamment de ne pas endommager la toile lorsqu'elle est stockée enroulée autour de l'enrouleur pendant une longue durée.

### 5.3 Variantes

### 5.3.1 Guidage de la toile dans un canal formé dans le rail

Selon une variante de l'invention, la toile **2** peut être guidée dans un canal formé dans les rails directement, au lieu d'être guidée dans un élément monté sur le rail comme décrit précédemment.

De la même manière que le guide de toile présentait un profil variable, c'est ici le rail **50** qui présente un profil qui évolue progressivement selon son axe longitudinal X. Plus précisément, c'est la position d'un canal **501** retenant les bords de la toile **2** et creusé directement dans le rail **50,** qui évolue au fil du rail.

Afin de mieux percevoir la variation de la position du canal **501** le long du rail, quatre sections de rails A', B', C' et D' perpendiculaires à l'axe longitudinal X du rail, sont définies sur la **figure 9****.** Ces sections sont représentées dans la configuration où le store d'occultation est fermé (la toile **2** est déployée et occulte la baie vitrée du pavillon). Ces sections représentent les positions successives que prend le canal **501** (et les bords de toile) entre la position fermée et la position ouverte du store.

La section A' (**figure 10A**) correspond à une vue en coupe (dans le plan YZ) du rail **50** selon l'axe A', dans la zone du pavillon où les rails **50, 60** sont le plus écartés. La section D' (**figure 10D**) correspond à une vue en coupe (dans le plan YZ) du rail **50** selon l'axe D', dans la zone du pavillon où les rails **50, 60** sont le plus proches.

Dans la section A' (**figure 10A**), le canal **501** recevant le renflement **21** de la toile **2** se trouve au plus proche de l'arête interne du rail de sorte que la toile **2** est maintenue tendue entre les deux rails **50, 60** en formant sensiblement une ligne droite selon l'axe Y. Dans la section A', la largeur **I1** entre les rails est sensiblement égale à la largeur L de la toile.

Dans la section B' (**figure 10B**), la position du canal **501** s'est déplacée au sein du rail selon les axes Y et Z.

Dans les sections C' et D' (**figures 10C** et **10D**), la position du canal **501** a de nouveau varié selon les axes Y et Z, formant sensiblement une portion de courbe en arc-de-cercle (plus généralement en arc de conique) dans l'espace. En particulier, la toile **2** qui suit la trajectoire courbe du canal **501** a effectué un quart de tour dans la section D' (selon les axes Y et Z) par rapport à sa position initiale.

En comparant la position du canal **501** entre les sections A' et D', on note que le quart de tour qu'il a effectué a permis à une certaine quantité de toile d'être « absorbée » par le rail.

Dans la section D', la largeur **I2** entre les rails est plus faible que la largeur L de la toile. Une quantité **L-I2/2** de toile a donc été acceptée dans chacun des rails.

En variante, on peut prévoir que la variation de position du canal soit assurée pour partie par le rail et pour partie par un élément additionnel tel que le guide de toile du mode de réalisation préférentiel.

Dans tous les cas, la trajectoire suivie par le canal 5**01** au sein du rail **50** n'est pas parallèle à l'axe longitudinal du rail. On comprend que ces différentes formes et variations du canal, ainsi que d'autres, peuvent être mises en oeuvre, que le canal soit formé dans le rail ou dans une (voire plusieurs) pièce(s) rapportée(s) sur celui-ci.

### 5.3.2 Enroulement en double épaisseur de la toile

Les figures **11** à **12A** présentent une variante de l'enroulement « à plat » de la toile autour de l'enrouleur **3.**

Selon cette variante, le tube enrouleur **3** est d'une largeur inférieure à la largeur **L** de la toile **2,** par exemple sensiblement égale à l'écartement **I2** entre les rails lorsqu'ils sont les plus proches l'un de l'autre, voire inférieure à cet écartement **I2.** Dans ce cas, un enroulement à plat comme décrit précédemment n'est pas possible.

Un élément de guidage additionnel **90,** illustré sur la **figure 11****,** est donc utilisé pour permettre de replier les bords de toile de manière à adapter l'enroulement à la longueur du tube. On prévoit que les extrémités de la toile sont repliées avant l'enroulement (celui-ci se faisant donc en double épaisseur, pour les extrémités latérales de la toile). Inversement, lors du déroulement, cet élément de guidage **90** assure le dépliage, avant l'introduction dans le canal de guidage du rail.

La **figure 11** est une vue agrandie d'une portion de la **figure 9** sur laquelle figurent trois axes de coupe E', F' et G' de l'élément de guidage **90,** perpendiculaires à l'axe longitudinal X du rail. Les sections respectives correspondant aux axes E', F' et G' sont représentées sur les **figures 12A** à **12C****.**

Comme illustré, l'élément de guidage additionnel **90** comporte un canal de guidage **901** dont la position évolue selon les axes Y et Z en définissant une portion de courbe en arc dans l'espace.

Entre les sections E' et G', le canal **901** assure le pliage progressif du bord de toile avant enroulement (respectivement le dépliage progressif pendant son déroulement). Ainsi, la toile **2** est guidée par le canal **901** dans un quart de tour supplémentaire lui permettant de se replier sur elle-même dans la zone où le renflement **21** de la toile s'apprête à sortir de l'élément de guidage **90** (et donc au niveau où la toile **2** s'enroule autour du tube d'enroulement **3**).

Le repli de la toile **2** sur elle-même dans cette section G' entraîne un enroulement de la toile **2** sur deux épaisseurs aux extrémités du tube d'enroulement **3.**

Le canal **901** peut présenter d'autres trajectoires permettant d'absorber un surplus de toile, comme un déplacement rectiligne du canal dans la direction Y (vers l'extérieur du rail ou de l'élément de guidage **90**) en fonction du déplacement de la toile le long du rail.

### 5.4 Barre de tirage

La barre de tirage **4** et son montage avec le rail, est représentée sur les **figures 5** à **7B****.** Elle est ici décrite pour le premier mode de réalisation décrit (c'est-à-dire mettant en oeuvre un guide de toile formé sur le rail et un enroulement « à plat » de la toile autour du tube enrouleur).

Toutefois, les caractéristiques décrites à suivre peuvent être adaptées aux variantes de réalisation du guidage de la toile, présentées au paragraphe 5.3.

La barre de tirage **4** comprend au moins un membre télescopique, afin d'être guidée dans les rails, même lorsque leur écartement varie. Elle est formée d'un corps principal (de préférence de forme parallélépipédique) dont les deux extrémités reçoivent respectivement un bras coulissant **41** (visible sur les **figures 7A** et **7B**) muni d'un embout **411** de liaison avec le rail.

Cet embout **411** est représenté en coupe sur la **figure 6****.** Il comprend une extrémité bombée **411A** de coopération avec une rainure **51** formée dans le rail **5,** une portion arquée **411B** s'insérant dans le rail, et un patin **411C** de coulissement le long du rail.

L'extrémité bombée **411A** est liée aux câbles de tirage, ce qui lui permet de coulisser dans la rainure **51** de façon à guider la barre de guidage **4** en translation le long de rails **5, 6,** selon une trajectoire rectiligne. La toile **2** du store est ainsi entraînée dans son mouvement de fermeture/ouverture.

En parallèle, la portion arquée **411B** et le patin **411C** servent de guides pour le bon coulissement de la barre de guidage dans les rails.

Le centrage de la barre de tirage est effectué au moyen de techniques connues de l'art antérieur (par exemple un pignon denté central coopérant avec une surface crantée interne au corps principal).

L'embout **411** de la barre est également en coopération avec un pion **22** positionné à l'interface entre le bord de toile **2** et le renflement **21** de la toile. Pour cela l'embout **411** comporte une rainure arquée **411D,** visible sur les **figures 7A** et **7B****,** à l'intérieur de laquelle coulisse le pion **22.**

Sur la **figure 7A****,** qui représente la position de la barre de tirage lorsque la toile est déroulée (c'est-à-dire dans la zone avant du pavillon, où les rails sont le plus écartés), le pion **22** est situé au voisinage de l'extrémité interne de la rainure **411D.** En effet, un maximum de toile **2** est exposé hors des rails, comme illustré sur la **figure 3A****.**

Sur la **figure 7B****,** qui représente la position de la barre de tirage lorsque la toile est enroulée (c'est-à-dire dans la zone arrière du pavillon, où les rails sont le plus proches), le pion **22** est situé au voisinage de l'extrémité externe de la rainure **411D.** Dans ce cas, un minimum de toile **2** est exposé hors des rails, un maximum de toile entrant à l'intérieur des rails, comme illustré sur la **figure 3B****.**

### 5.5 Matériaux

Dans les différents modes de réalisation, les rails **5, 6, 50, 60** peuvent par exemple être réalisés en aluminium, et obtenus par extrusion.

La toile **2** peut être une toile classique ou une toile stretch, au moins dans la direction de la largeur (**Y**), et au moins sur ses portions longitudinales.

Le guide de toile **8** peut être réalisé en thermoplastique souple (par exemple bi-matière) et obtenu par extrusion et découpe. Il peut être fixé sur le rail par emboîtement, vissage, clippage et/ou collage.

### 5.6 Fonctionnement

Lorsqu'un utilisateur souhaite faire entrer la lumière dans l'habitacle de son véhicule, et donc faire passer le store de sa position fermée (baie occultée) à sa position ouverte (baie découverte), il actionne les moyens de commande **7** motorisés.

Les câbles exercent un effort de poussée ou de traction, selon les montages, sur la barre de tirage **4** dans le prolongement des extrémités bombées **411A** de l'embout **411** de la barre de tirage. Ainsi, l'ensemble formé par la barre de tirage **4** et la toile **2** est dirigé en direction du tube d'enroulement **3.**

La barre de tirage coulisse de manière rectiligne dans les rainures **51** formées à la surface des rails **5, 6** entraînant la toile **2,** de façon à découvrir peu à peu la surface vitrée du pavillon. Sa largeur varie en fonction de l'écartement des rails, de façon connue en soi.

Entre la position fermée du store et la position ouverte du store, les bords de toile **2** guidés en translation dans les canaux **81, 501** (formés dans un guide de toile monté sur les rails, ou formés directement dans les rails), suivent une trajectoire prédéfinie par les positions successives de ces canaux rapportées dans un plan YZ perpendiculaire à l'axe longitudinal (X) des rails (sections A à C, A' à D'). Les bords de toile sont ensuite enroulés autour du tube d'enroulement **3** selon une configuration « à plat » ou en double épaisseur, selon la longueur prévue du tube d'enroulement. Pour cela, les bords de toile suivent une trajectoire prédéfinie par des positions successives des canaux **91, 901** formés dans les éléments de guidage additionnels **9, 90** positionnés à la suite des rails.Ces trajectoires permettent qu'un surplus de toile soit accepté à l'intérieur des rails au voisinage de l'enrouleur **3,** où les rails **5, 6, 50, 60** sont inclinés l'un vers l'autre.

Au voisinage de l'enrouleur **3,** les renflements **21** de la toile se délogent des canaux **91, 901,** et la toile **2** termine ainsi sa course autour du tube d'enroulement **3,** découvrant alors totalement la baie vitrée du pavillon.

Dans le mode de réalisation préférentiel, la toile **2** est enroulée en une seule épaisseur autour du tube d'enroulement, tandis que dans une variante elle est repliée sur les extrémités de l'enrouleur en double épaisseur.

Bien entendu, dans le cas de l'occultation d'une surface vitrée d'un pavillon, les opérations décrites ci-dessus se déroulent selon une chronologie inverse.

## Revendications

1. Dispositif d'occultation (1) d'une surface vitrée d'un véhicule automobile comprenant deux rails de guidage (5, 6, 50, 60) non parallèles et une toile (2) guidée en translation entre lesdits rails de guidage (5, 6, 50, 60) pour couvrir ou découvrir ladite surface vitrée, ladite toile (2) portant sur chacun de ses bords longitudinaux des moyens de retenue (21) circulant dans un canal (81, 501) de retenue formé dans et/ou porté par chacun desdits rails (5, 6, 50, 60), une partie de la toile (2), s'étendant à partir desdits bords longitudinaux, circulant à l'intérieur dudit rail,
**caractérisé en ce que** la position dudit canal (81, 501), rapportée dans un plan perpendiculaire à l'axe longitudinal du rail (5, 6, 50, 60) varie progressivement par rapport audit rail (5, 6, 50, 60), de façon que la quantité de toile circulant dans ledit rail (5, 6, 50, 60) varie en correspondance.

2. Dispositif d'occultation (1) suivant la revendication 1, **caractérisé en ce que** ladite position du canal (81, 501) varie selon au moins deux directions perpendiculaires à l'axe longitudinal du rail (5, 6, 50, 60).

3. Dispositif d'occultation (1) suivant l'une quelconque des revendications 1 et 2, **caractérisé en ce que** ledit canal (81, 501) suit une trajectoire formant une courbe lorsqu'elle est projetée sur ledit plan perpendiculaire.

4. Dispositif d'occultation (1) suivant les revendications 1 à 3, **caractérisé en ce que** ledit canal (501) est formé directement dans ledit rail (50).

5. Dispositif d'occultation (1) suivant les revendications 1 à 3, **caractérisé en ce que** ledit canal (81) est formé dans un guide de toile (8) monté sur ledit rail (5).

6. Dispositif d'occultation (1) suivant l'une quelconque des revendications 1 à 5, **caractérisé en ce que** lesdits moyens de retenue (21) comprennent un renflement s'étendant sur lesdits bords longitudinaux de ladite toile (2).

7. Dispositif d'occultation (1) suivant l'une quelconque des revendications 1 à 6, **caractérisé en ce que** ladite toile (2) est solidaire d'une barre de tirage (4) télescopique mobile en translation entre lesdits rails de guidage (5, 6, 50, 60).

8. Dispositif d'occultation (1) suivant l'une quelconque des revendications 1 à 7, **caractérisé en ce qu'**il comprend des moyens de guidage (90) d'au moins un desdits bords longitudinaux de la toile (2), adaptant la position dudit bord longitudinal entre ledit canal (81) et un enrouleur (3), de façon que ledit bord longitudinal soit enroulé de façon repliée sur lui-même sur ledit enrouleur (3).

9. Dispositif d'occultation (1) suivant l'une quelconque des revendications 1 à 7, **caractérisé en ce qu'**il comprend des moyens de guidage (9) d'au moins un desdits bords longitudinaux de la toile (2), adaptant la position dudit bord longitudinal entre ledit canal (81) et un enrouleur (3), de façon que ladite toile soit enroulée à plat sur ledit enrouleur (3).

10. Véhicule automobile comprenant au moins un dispositif d'occultation (1) d'une surface vitrée d'un pavillon de véhicule automobile comprenant deux rails de guidage (5, 6, 50, 60) non parallèles et une toile (2) guidée en translation entre lesdits rails de guidage (5, 6, 50, 60) pour couvrir ou découvrir ladite surface vitrée, ladite toile (2) portant sur chacun de ses bords longitudinaux des moyens de retenue (21) circulant dans un canal de retenue (81, 501) formé dans et/ou porté par chacun desdits rails (5, 6, 50, 60), une partie de la toile (2), s'étendant à partir desdits bords longitudinaux, circulant à l'intérieur dudit rail (5, 6, 50, 60),
**caractérisé en ce que** la position dudit canal (81, 501), rapportée dans un plan perpendiculaire à l'axe longitudinal du rail (5, 6, 50, 60) varie progressivement par rapport audit rail (5, 6, 50, 60), de façon que la quantité de toile (2) circulant dans ledit rail (5, 6, 50, 60) varie en correspondance.

## Patentansprüche

1. Verdunkelungsvorrichtung (1) für eine Glasfläche eines Kraftfahrzeugs, umfassend zwei nicht parallele Führungsschienen (5, 6, 50, 60) und einen Stoff (2), der zwischen den Führungsschienen (5, 6, 50, 60) verschiebbar geführt ist, um die Glasfläche zu bedecken oder freizulegen, wobei der Stoff (2) an jeder seiner Längskanten Haltemittel (21) trägt, die in einem Haltekanal (81, 501) zirkulieren, der in jeder der Schienen (5, 6, 50, 60) ausgebildet ist und/oder davon getragen wird, wobei ein Teil des Stoffs (2), der sich sich von den Längskanten erstreckt, im Inneren der Schiene zirkuliert,
**dadurch gekennzeichnet, dass** sich die Position des Kanals (81, 501), in einer Ebene senkrecht zur Längsachse der Schiene (5, 6, 50, 60) übertragen, allmählich in Bezug auf die Schiene (5, 6, 50, 60) derart ändert, dass sich die Stoffmenge, die in der Schiene (5, 6, 50, 60) zirkuliert, entsprechend ändert.

2. Verdunkelungsvorrichtung (1) nach Anspruch 1, **dadurch gekennzeichnet, dass** sich die Position des Kanals (81, 501) in mindestens zwei Richtungen, die senkrecht zu der Längsachse der Schiene (5, 6, 50, 60) sind, ändert.

3. Verdunkelungsvorrichtung (1) nach einem der Ansprüche 1 und 2, **dadurch gekennzeichnet, dass** der Kanal (81, 501) einer Bahn folgt, die eine Kurve bildet, wenn sie auf die senkrechte Ebene projiziert ist.

4. Verdunkelungsvorrichtung (1) nach den Ansprüchen 1 bis 3, **dadurch gekennzeichnet, dass** der Kanal (501) direkt in der Schiene (50) gebildet ist.

5. Verdunkelungsvorrichtung (1) nach den Ansprüchen 1 bis 3, **dadurch gekennzeichnet, dass** der Kanal (81) in einer Führung aus Stoff (8) gebildet ist, die auf der Schiene (5) befestigt ist.

6. Verdunkelungsvorrichtung (1) nach einem der Ansprüche 1 bis 5, **dadurch gekennzeichnet, dass** die Haltemittel (21) eine Ausbuchtung aufweisen, die sich auf den Längskanten des Stoffes (2) erstreckt.

7. Verdunkelungsvorrichtung (1) nach einem der Ansprüche 1 bis 6, **dadurch gekennzeichnet, dass** der Stoff (2) mit einer Teleskopzugstange (4) fest verbunden ist, die zwischen den Führungsschienen (5, 6, 50, 60) verschiebbar ist.

8. Verdunkelungsvorrichtung (1) nach einem der Ansprüche 1 bis 7, **dadurch gekennzeichnet, dass** sie Führungsmittel (90) von mindestens einer der Längskanten des Stoffes (2) aufweist, die die Position der Längskante zwischen dem Kanal (81) und einem Aufwickler (3) derart anpasst, dass die Längskante auf sich selbst gefaltet auf dem Aufwickler (3) aufgewickelt wird.

9. Verdunkelungsvorrichtung (1) nach einem der Ansprüche 1 bis 7, **dadurch gekennzeichnet, dass** sie Führungsmittel (9) von mindestens einer der Längskanten des Stoffes (2) aufweist, die die Position der Längskante zwischen dem Kanal (81) und einem Aufwickler (3) derart anpasst, dass der Stoff flach auf dem Aufwickler (3) aufgewickelt wird.

10. Kraftfahrzeug, umfassend mindestens eine Verdunkelungsvorrichtung (1) für eine Glasfläche eines Kraftfahrzeugdachhimmels, umfassend zwei nicht parallele Führungsschienen (5, 6, 50, 60) und einen Stoff (2), der zwischen den Führungsschienen (5, 6, 50, 60) verschiebbar geführt ist, um die Glasfläche zu bedecken oder freizulegen, wobei der Stoff (2) an jeder seiner Längskanten Haltemittel (21) trägt, die in einem Haltekanal (81, 501) zirkulieren, der in jeder der Schienen (5, 6, 50, 60) ausgebildet ist und/oder davon getragen wird, wobei ein Teil des Stoffs (2), der sich sich von den Längskanten erstreckt, im Inneren der Schiene (5, 6, 50, 60) zirkuliert,
**dadurch gekennzeichnet, dass** sich die Position des Kanals (81, 501), in einer Ebene senkrecht zur Längsachse der Schiene (5, 6, 50, 60) übertragen, allmählich in Bezug auf die Schiene (5, 6, 50, 60) derart ändert, dass sich die Menge an Stoff (2), die in der Schiene (5, 6, 50, 60) zirkuliert, entsprechend ändert.

## Claims

1. Shading device (1) for a glazed surface of a motor vehicle, comprising two non-parallel guide rails (5, 6, 50, 60) and a cloth (2) guided in translational movement between said guide rails (5, 6, 50, 60) to cover or uncover the said glazed surface, said cloth (2) carrying on each of its longitudinal edges retaining means (21) travelling in a retaining channel (81, 501) formed in and/or carried by each of the said rails (5, 6, 50, 60), a part of the cloth (2), extending from the said longitudinal edges, travelling inside the said rail,
**characterised in that** the position of said channel (81, 501), oriented in a plane perpendicular to the longitudinal axis of the rail (5, 6, 50, 60) varies progressively with respect to said rail (5, 6, 50, 60), so that the amount of cloth travelling in the said rail (5, 6, 50, 60) varies accordingly.

2. Shading device (1) according to claim 1, **characterised in that** said position of the channel (81, 501) varies in at least two directions perpendicular to the longitudinal axis of the rail (5, 6, 50, 60).

3. Shading device (1) according to any one of claims 1 and 2, **characterised in that** said channel (81, 501) follows a trajectory forming a curve when it is projected onto said perpendicular plane.

4. Shading device (1) according to claims 1 to 3, **characterised in that** the said channel (501) is formed directly in said rail (50).

5. Shading device (1) according to claims 1 to 3, **characterised in that** the said channel (81) is formed in a cloth guide (8) mounted on the said rail (5).

6. Shading device (1) according to any one of claims 1 to 5, **characterised in that** said retaining means (21) comprise a bulge extending on said longitudinal edges of said cloth (2).

7. Shading device (1) according to any one of claims 1 to 6, **characterised in that** the said cloth (2) is integral with a telescopic draw bar (4) mobile in translational movement between said guide rails (5, 6, 50, 60).

8. Shading device (1) according to any one of claims 1 to 7, **characterised in that** it comprises means for guiding (90) at least one of the said longitudinal edges of the cloth (2), adapting the position of the said longitudinal edge between said channel (81) and a reel (3), such that the said longitudinal edge is wound in a manner folded on itself onto said reel (3).

9. Shading device (1) according to any one of claims 1 to 7, **characterised in that** it comprises means for guiding (9) at least one of said longitudinal edges of the cloth (2), adapting the position of said longitudinal edge between said channel (81) and a reel (3), such that said cloth is wound flat onto said reel (3).

10. Motor vehicle comprising at least one shading device (1) for a glazed surface of a motor vehicle roof, comprising two non-parallel guide rails (5, 6, 50, 60) and a cloth (2) guided in translational movement between said guide rails (5, 6, 50, 60) to cover or uncover said glazed surface, the said cloth (2) carrying on each of its longitudinal edges retaining means (21) travelling in a retaining channel (81, 501) formed in and/or carried by each of the said rails (5, 6, 50, 60), a part of the cloth (2), extending from the said longitudinal edges, travelling inside the said rail (5, 6, 50, 60),
**characterised in that** the position of the said channel (81, 501), oriented in a plane perpendicular to the longitudinal axis of the rail (5, 6, 50, 60) varies progressively relative to the said rail (5, 6, 50, 60), so that the amount of cloth (2) travelling in the said rail (5, 6, 50, 60) varies accordingly.
